# EUROPÄISCHE PATENTSCHRIFT

(11) **EP 0 733 838 B1**
(45) Veröffentlichungstag und Bekanntmachung des Hinweises auf die Patenterteilung: **27.06.2001**
(21) Anmeldenummer: 96103597.9
(22) Anmeldetag: 08.03.1996
(51) Int. Cl.: F16K 25/00, F16K 27/04, F16K 3/08, F16K 11/078

(54) **Verfahren zur Herstellung von Planschieberventilen**
Method of manufacturing valves with flat discs
Procédé de fabrication de valves à disques planes

(30) Priorität: 21.03.1995 DE 19510205
(43) Veröffentlichungstag der Anmeldung: 25.09.1996
(73) Patentinhaber: CeramTec AG Innovative Ceramic Engineering, 73207 Plochingen (DE)
(72) Erfinder: Meier, Gerd, Dipl.-Ing., D-91227 Leinburg (DE); Stingl, Peter, Dr., D-91207 Lauf-Kuhnhof (DE); Russner, Klaus, D-91207 Lauf (DE); Seitz, Wolfgang, D-74211 Leingarten (DE); Wellhäuser, Ullrich, D-74889 Sinsheim (DE)
(74) Vertreter: Uppena, Franz, Dr.

(56) Entgegenhaltungen:
- EP-A- 0 063 660
- EP-A- 0 416 294
- EP-A- 0 616 156
- DE-A- 3 533 657
- NL-A- 7 811 932

## Beschreibung

Die Erfindung betrifft ein Verfahren zur Herstellung eines Planschieberventils, bei dem mindestens eine Einlaßscheibe und mindestens eine Regelscheibe in einem Gehäuse des Planschieberventils angeordnet sind und wobei die mindestens eine Regelscheibe mittels eines Steuerhebels betätigbar ist. Armaturen mit Planschieberventilen bzw. Planschieberventile werden vor allem im Sanitär- und Haushaltsbereich, in der chemischen und verfahrenstechnischen Industrie und in der Getränkeindustrie eingesetzt.

Sanitärarmaturen mit keramischen Einlaß- oder/und Regelscheiben sind dem Sanitärfachmann aus der täglichen Praxis bekannt. Der Vorteil von Sanitärarmaturen mit keramischen Einlaß- oder/und Regelscheiben gegenüber anderen Dichtsystemen besteht darin, daß diese Armaturen üblicherweise über viele Jahre hinweg wartungsfrei, zuverlässig und störungsfrei betrieben werden können. Weiterhin bestehen erhebliche Vorteile im Komfort, da bei Planschieberventilen mit Keramikscheiben die Umschaltwege und -kräfte, die zur Beeinflussung der Flüssigkeitsströme aufgebracht werden müssen, z.B. in Einhebel- oder Mehrhebelmischarmaturen wesentlich geringer sind als bei der früheren Armaturengeneration mit einer zylindrischen Dichtungsausführung, die aufgrund der Konstruktion auf bewegliche, dem Verschleiß und der Alterung stärker ausgesetzte Dichtungen aus Gummi angewiesen waren.

Eine Dichtscheibe ist ein Element eines Planschieberventils. Der Begriff Dichtscheibe wird als Oberbegriff von Einlaß-, Grund-, Kontroll-, Regel- und Steuerscheiben verwendet; bezüglich der Vielzahl der Unterbegriffe wird hier nur von Einlaß- bzw. von Regelscheiben gesprochen. Eine Einlaßscheibe nimmt die ankommenden Flüssigkeitsströme auf, während eine Regelscheibe die zugehörigen Flüssigkeitskanäle in Verbindung mit der Einlaßscheibe sperrt, teilweise öffnet oder gänzlich öffnet. Der einzelne Flüssigkeitsstrom oder der aus mehreren Flüssigkeitskanälen ankommende und gemischte Flüssigkeitsstrom wird schließlich über mindestens einen anderen Kanal durch die Einlaßscheibe hindurch weitergeleitet. Es gibt eine Vielzahl von Dichtscheibengeometrien, die in Serie angewandt werden und sich in ihrer Größe, Form und Ausgestaltung unterscheiden, vor allem in ihrem Durchmesser und in ihren Durchbrüchen und Taschen.

Aus der EP 0 616 156 A1 (worauf die Oberbegriffe der Ansprüche 1 und 2 gestütat sind) ist eine Steuerpatrone für eine Einhebel-Mischarmatur bekannt. Sie umfaßt eine erste Steuerscheibe, die in einem Gehäuse mittels eines Patronenbodens mit Verdrehsicherungszapfen im Armaturengehäuse verankert ist. Die zweite Steuerscheibe ist mittels eines Betätigungselements drehbar und unmittelbar auf der ersten Steuerscheibe angeordnet. Die Verbindung zum Betätigungselement, einem Betätigungshebel, erfolgt über zwei miteinander gekoppelte Mitnehmerbuchsen, wobei die zweite Mitnehmerbuchse mit einem Mitnehmerzapfen in die zweite Steuerscheibe eingreift. Zwischen der zweiten Mitnehmerbuchse und der Steuerscheibe ist außerdem eine Dichtung angeordnet. Wie aus dieser Schrift hervorgeht, sind zur Fixierung der Steuerscheibe im Gehäuse sowie der Verbindung zwischen der zweiten Steuerscheibe und dem Betätigungshebel mehrere verschraubbare Einzelteile erforderlich.

Allen Armaturen mit Planschieberventilen ist bisher gemeinsam, daß sie nach dem Stand der Technik aus den Einzelkomponenten Dichtscheiben, Dichtringen, Steuerhebel und Gehäuse oder Elementen des Gehäuses einzeln zusammengefügt werden. Dies geschieht z.B. durch Klipsen (elastisches Einrasten) oder Verschweißen. Von Nachteil ist, daß alle diese Einzelkomponenten gegenseitig ausgerichtet und zusammengefügt werden müssen. Außerdem treten immer häufiger Abdichtungsprobleme im Gehäuse auf, da bei der oft stattfindenden Erhöhung des Drucks in den Wasserverteilungsnetzen die Dichtungen von den Dichtscheiben oder/und dem Gehäuse in der Armatur abheben können, so daß die Armatur undicht wird.

Das Funktionsprinzip eines Planschieberventils sieht vor, daß die mindestens eine Einlaßscheibe verdrehsicher im Gehäuse angeordnet ist und mindestens eine Regelscheibe darüber beweglich angeordnet ist. Die Regelscheibe ist entweder über ein Verbindungselement mit dem Steuerhebel oder direkt mit dem Steuerhebel verbunden. Zwischen Gehäuse und Einlaßscheibe sowie zwischen Regelscheibe und Gehäuse sind Dichtungen enthalten, die eine Leckage verhindern sollen.

Ein Planschieberventil für die Steuerung von Flüssigkeitsströmen besteht in der Regel aus einem Gehäuse oder mehreren Gehäuseelementen, aus zwei oder drei Dichtscheiben, aus Komponenten zum Abdichten wie z.B. Dichtringen oder Dichtprofilen, aus Geräuschdämpfern sowie aus dem Steuerhebel bzw. den Steuerhebelelementen und evtl. aus Siebeinsätzen. Die verschiedenen Einzelteile werden zusammen mit den Dichtscheiben unter Einhaltung genau definierter Drücke in einem Gehäuse zusammengepreßt und fixiert. Die Dichtscheiben bestehen meistens aus einem verschleiß- und korrosionsbeständigen Werkstoff wie z.B. einem Aluminiumoxid- oder Siliciumcarbid-reichen Keramikwerkstoff.

Der vorliegenden Erfindung liegt die Aufgabe zugrunde, ein einfacheres Verfahren zur Herstellung eines Planschieberventils und ein kostengünstiges Planschieberventil vorzuschlagen, bei dem nicht die häufig beobachteten Abdichtungsprobleme auftreten.

Diese Aufgabe wird erfindungsgemäß gelöst mit einem Verfahren zur Herstellung eines Planschieberventils, bei dem mindestens eine Einlaßscheibe und mindestens eine Regelscheibe in einem Gehäuse des Planschieberventils angeordnet sind und wobei die mindestens eine Regelscheibe mittels eines Steuerhebels betätigbar ist,
dadurch gekennzeichnet, daß mindestens eine Einlaßscheibe in das Gehäuse oder ein Element des Gehäuses mittels Kunststoffspritzgußtechnik eingebettet wird und daß diese Einlaßscheibe ohne Einfügen einer Dichtung zwischen dieser Einlaßscheibe und dem Gehäuse oder dem Gehäuseelement mit diesem verbunden wird.

Diese Aufgabe wird ferner erfindungsgemäß gelöst, mit einem Verfahren zur Herstellung eines Planschieberventils, bei dem mindestens eine Einlaßscheibe und mindestens eine Regelscheibe in einem Gehäuse des Planschieberventils angeordnet sind und wobei die mindestens eine Regelscheibe mittels eines Steuerhebels betätigbar ist, dadurch gekennzeichnet, daß mindestens eine Regelscheibe über ein Verbindungselement mit dem Steuerhebel oder direkt mit dem Steuerhebel durch Kunststoffspritzgußtechnik, ohne Einfügen einer Dichtung, verbunden wird.

In dem erfindungsgemäßen Planschieberventil ist die mindestens eine Einlaßscheibe entgegen dem Stand der Technik anstelle über eine Dichtung und eine Verdrehsicherung direkt in das Gehäuse oder ein Element des Gehäuses mittels Kunststoffspritzgußtechnik eingebettet. Eine weitere Ausgestaltung der Erfindung bindet die Regelscheibe in das Verbindungselement zum Steuerhebel oder direkt in den Steuerhebel ein, was ebenfalls mittels Kunststoffspritzgußtechnik erfolgt. In beiden Fällen wird durch diese Bauweise verhindert, daß eine Undichtigkeit wegen einer falsch sitzenden, abgehobenen oder verschlissenen Dichtung auftritt; außerdem wird die Montage erheblich erleichtert und werden die Herstell- und Reparaturkosten reduziert. Bei jeder dieser erfindungsgemäßen Verbindungen entfällt üblicherweise gegenüber einer entsprechenden Konstruktion nach dem Stand der Technik ein Dichtring oder eine Dichtlippe zwischen der Dichtscheibe und dem damit verbundenen Gehäuse, Gehäuseelement oder Verbindungselement bzw. zum Steuerhebel hin. Auch die Bauhöhe des Ventils wird hierdurch verringert.

Die Dichtscheiben der erfindungsgemäßen Planschieberventile bestehen vorzugsweise aus einer Keramik wie z.B. Aluminiumoxid-haltiger oder Siliciumcarbid-haltiger Keramik oder aus einem Verbundwerkstoff oder enthalten vorzugsweise Verbundbauteile wie z.B. aus Keramik/Metall-, Keramik/Kunststoff- oder Metall/Kunststoff-Teilen.

Die Dichtscheiben lassen sich partiell mit einem Kunststoff ummanteln, wobei dieser Mantel gleichzeitig auch andere Funktionen wie z.B. die eines Gehäuses oder Gehäuseelementes bzw. eines Verbindungselementes oder Steuerhebels übernehmen kann. Dichtscheiben mit abgestuften oder abgeschrägten Seitenpartien können beispielsweise schwalbenschwanzartig im Kunststoffteil gefaßt und verankert werden. Die Einbindung der Abstufung bzw. Abschrägung der Dichtscheibe im Kunststoff kann so erfolgen, daß der Kunststoff in der Senkrechten zur Funktionsfläche der Dichtscheibe nicht hinausragt, um den Bewegungsraum der bewegten Dichtscheiben nicht konstruktiv einzuschränken. Ausnehmungen in der Dichtscheibe können auch hierbei als Verdrehsicherung dienen. Das Kunststoffteil kann vorteilhaft im Spritzgußverfahren hergestellt werden, indem die einzubindende Dichtscheibe vor dem Spritzgießen im Spritzgußwerkzeug positioniert und dort umspritzt wird. Als Kunststoffe können die bekannten Spritzgußwerkstoffe eingesetzt werden. Die Verfahren des Kunststoffspritzgießens sind dem Fachmann hinlänglich bekannt und bedürfen keiner weiteren Erläuterung.

Die erfindungsgemäßen Planschieberventile können für die Steuerung von Flüssigkeitsströmen im Haushalts- und Sanitärbereich wie auch beispielsweise in der chemischen und verfahrenstechnischen Industrie, Getränkeindustrie verwendet werden. Die Kunststoffspritzguß- oder Klebetechnik kann in jedem Anwendungsfall mit Hilfe des dem Fachmann geläufigen Wissens im Rahmen der Produktauslegung angepaßt werden.

## Patentansprüche

1. Verfahren zur Herstellung eines Planschieberventils, bei dem mindestens eine Einlaßscheibe und mindestens eine Regelscheibe in einem Gehäuse des Planschieberventils angeordnet sind und wobei die mindestens eine Regelscheibe mittels eines Steuerhebels betätigbar ist, dadurch gekennzeichnet, daß mindestens eine Einlaßscheibe in das Gehäuse oder ein Element des Gehäuses mittels Kunststoffspritzgußtechnik eingebettet wird und daß diese Einlaßscheibe ohne Einfügen einer Dichtung zwischen dieser Einlaßscheibe und dem Gehäuse oder dem Gehäuseelement mit diesem verbunden wird.

2. Verfahren zur Herstellung eines Planschieberventils, bei dem mindestens eine Einlaßscheibe und mindestens eine Regelscheibe in einem Gehäuse des Planschieberventils angeordnet sind und wobei die mindestens eine Regelscheibe mittels eines Steuerhebels betätigbar ist, dadurch gekennzeichnet, daß die mindestens eine Regelscheibe über ein Verbindungselement mit dem Steuerhebel oder direkt mit dem Steuerhebel durch Kunststoffspritzgußtechnik, ohne Einfügen einer Dichtung, verbunden wird.

3. Verfahren zur Herstellung eines Planschieberventils nach Anspruch 1, dadurch gekennzeichnet, daß diese Einlaßscheibe mit einer Bodenplatte als Element des Gehäuses mittels Kunststoffspritzgußtechnik verbunden wird.

4. Verfahren zur Herstellung eines Planschieberventils nach einem der Ansprüche 1 bis 3, dadurch gekennzeichnet, daß die Einlaß- oder/und Regelscheiben aus Keramik hergestellt werden.

5. Verfahren zur Herstellung eines Planschieberventils nach Anspruch 1 bis 3, dadurch gekennzeichnet, daß die Einlaß- oder/und Regelscheiben als Verbundbauteil aus Keramik- und Metallteilen, aus Keramik- und Kunststoffteilen oder aus Metall- und Kunststoffteilen hergestellt werden.

6. Verfahren zur Herstellung eines Planschieberventils nach Anspruch 4 oder 5, dadurch gekennzeichnet, daß der Keramikwerkstoff der Einlaß- oder/und Regelscheiben mit aluminiumoxid- oder siliciumcarbidhaltigen Werkstoffen hergestellt wird.

7. Verfahren zur Herstellung eines Planschieberventils nach einem der Ansprüche 1 bis 3, dadurch gekennzeichnet, daß die Einlaß- oder/und Regelscheiben aus einem Verbundwerkstoff hergestellt werden.

8. Verfahren zur Herstellung eines Planschieberventils nach einem der Ansprüche 1 bis 7, dadurch gekennzeichnet, daß von den Einlaß- oder/und Regelscheiben, die nicht durch Kunststoffspritzguß mit dem Gehäuse, einem Gehäuseelement, einem Verbindungselement oder dem Steuerhebel verbunden worden sind, die Scheiben mindestens eine Funktionsfläche aufweisen und daß die anderen Flächen mit einem Kunststoffmantel umgeben worden sind.

9. Verwendung eines Planschieberventils, hergestellt nach einem der Ansprüche 1 bis 8, im Sanitär- oder Haushaltsbereich, in der Chemie, in der Verfahrenstechnik oder in der Getränkeindustrie.

## Claims

1. Method for producing a flat disc valve, in which at least one inlet disc and at least one control disc are arranged in a housing of the flat disc valve and in which it is possible to actuate the at least one control disc by means of a control lever, characterised in that at least one inlet disc is embedded in the housing or an element of the housing by means of plastics injection-moulding technology, and in that this inlet disc is connected to the housing or the housing element without insertion of a seal between this inlet disc and said housing or housing element.

2. Method for producing a flat disc valve, in which at least one inlet disc and at least one control disc are arranged in a housing of the flat disc valve and in which it is possible to actuate the at least one control disc by means of a control lever, characterised in that the at least one control disc is connected by way of a connecting element to the control lever or is connected directly to the control lever by means of plastics injection-moulding technology, without the insertion of a seal.

3. Method for producing a flat disc valve according to claim 1, characterised in that said inlet disc is connected to a base plate as an element of the housing by means of plastics injection-moulding technology.

4. Method for producing a flat disc valve according to one of claims 1 to 3, characterised in that the inlet and/or control discs are produced from ceramic material.

5. Method for producing a flat disc valve according to claim 1 to 3, characterised in that the inlet and/or control discs are produced as a composite component made from ceramic and metal portions, from ceramic and plastics portions or from metal and plastics portions.

6. Method for producing a flat disc valve according to claim 4 or 5, characterised in that the ceramic material of the inlet and/or control discs is produced by means of materials containing aluminium oxide or silicon carbide.

7. Method for producing a flat disc valve according to one of claims 1 to 3, characterised in that the inlet and/or control discs are produced from a composite material.

8. Method for producing a flat disc valve according to one or claims 1 to 7, characterised in that, those of the inlet and/or control discs which have not been connected to the housing, a housing element, a connecting element or the control lever by means of plastics injection-moulding, have at least one functional face, and in that the other faces have been surrounded by a plastics sheath.

9. Use of a flat disc valve, produced according to one of claims 1 to 8, in the field of sanitation or the home, in chemistry, in process engineering or in the drinks industry.

## Revendications

1. Procédé de fabrication d'une vanne à coulisseau plan, selon lequel au moins un disque d'admission et au moins un disque de régulation sont disposés dans un corps de la vanne à coulisseau plan et le disque de régulation, au nombre d'au moins un, est actionné à l'aide d'un levier de commande, caractérisé par le fait qu'au moins un disque d'admission est encastré dans le corps ou dans un élément du corps par une technique de moulage par injection de matière plastique et par le fait que ledit disque d'admission est lié au corps ou à l'élément de corps, sans intercalage d'un joint d'étanchéité entre ledit disque d'admission et le corps ou l'élément de corps.

2. Procédé de fabrication d'une vanne à coulisseau plan, selon lequel au moins un disque d'admission et au moins un disque de régulation sont disposés dans un corps de la vanne à coulisseau plan et le disque de régulation, au nombre d'au moins un, est actionné à l'aide d'un levier de commande, caractérisé par le fait que le disque de régulation, au nombre d'au moins un, est lié au levier de commande par l'intermédiaire d'un élément de liaison ou directement, par une technique de moulage par injection de matière plastique, sans intercalage d'un joint d'étanchéité.

3. Procédé de fabrication d'une vanne à coulisseau plan selon la revendication 1, caractérisé par le fait que le disque d'admission est lié par une technique de moulage par injection de matière plastique à une plaque de base en tant qu'élément du corps.

4. Procédé de fabrication d'une vanne à coulisseau plan selon l'une des revendications 1 à 3, caractérisé par le fait que le(s) disque(s) d'admission et/ou le(s) disque(s) de régulation est(sont) réalisé(s) en céramique.

5. Procédé de fabrication d'une vanne à coulisseau plan selon les revendications 1 à 3, caractérisé par le fait que le(s) disque(s) d'admission et/ou le(s) disque(s) de régulation est(sont) réalisé(s) comme élément(s) composite(s) à partir d'éléments en céramique et d'éléments métalliques, à partir d'éléments en céramique et d'éléments en matière plastique ou à partir d'éléments métalliques et d'éléments en matière plastique.

6. Procédé de fabrication d'une vanne à coulisseau plan selon la revendication 4 ou 5, caractérisé par le fait que le matériau céramique du(des) disque(s) d'admission et/ou du(des) disque(s) de régulation est réalisé avec des matériaux à base d'oxyde d'aluminium ou à base de carbure de silicium.

7. Procédé de fabrication d'une vanne à coulisseau plan selon l'une des revendications 1 à 3, caractérisé par le fait que le(s) disque(s) d'admission et/ou le(s) disque(s) de régulation est(sont) réalisé(s) en un matériau composite.

8. Procédé de fabrication d'une vanne à coulisseau plan selon l'une des revendications 1 à 7, caractérisé par le fait que sur les disques d'admission et/ou les disques de régulation qui n'ont pas été reliés par moulage par injection de matière plastique au corps, à un élément du corps, à un élément de liaison ou au levier de commande, les surfaces de disque présentent au moins une surface active et par le fait que les autres surfaces sont entourées d'une enveloppe en matière plastique.

9. Utilisation d'une vanne à coulisseau plan, réalisée selon l'une des revendications 1 à 8, dans le domaine sanitaire ou ménager, dans le domaine de la chimie ou de la technologie des procédés industriels ou dans l'industrie des boissons.
